# EUROPÄISCHE PATENTSCHRIFT

(11) **EP 1 995 847 B1**
(45) Veröffentlichungstag und Bekanntmachung des Hinweises auf die Patenterteilung: **06.01.2016**
(21) Anmeldenummer: 08001773.4
(22) Anmeldetag: 31.01.2008
(51) Int. Cl.: H02K 1/17, H02K 41/03

(54) **Planarmotor**
Planar motor
Moteur planaire

(30) Priorität: 25.05.2007 DE 102007024602
(43) Veröffentlichungstag der Anmeldung: 26.11.2008
(73) Patentinhaber: ETEL S.A., 2112 Môtiers (CH)
(72) Erfinder: Cardon, Vincent, 21700 Arcenant (FR); Morel, Jean-Pierre, 25300 Les Fourgs (FR)
(74) Vertreter: Pleyer, Hans Anno

(56) Entgegenhaltungen:
- JP-A- 9 092 498
- JP-A- 2007 028 734
- US-A1- 2003 155 821
- US-B1- 6 188 147

## Beschreibung

Die vorliegende Erfindung betrifft einen Planarmotor. Solche Planarmotore dienen zum Positionieren einer Last in einer Ebene.

Planarmotore sind beispielsweise aus der Elektronikindustrie bekannt, wo bei der Herstellung von integrierten Schaltkreisen Halbleiterscheiben (Wafer) hochgenau in einer Ebene positioniert werden müssen, etwa um die Wafer photolithographisch zu bearbeiten.

Aus der US 6188147 B1 ist ein solcher Planarmotor bekannt, der ein ebenes Grundelement mit pyramidenförmigen Vorsprüngen aufweist, auf denen Magnete mit unterschiedlichen Magnetisierungsrichtungen aufgesetzt sind, so dass sich in Summe über jeder der Pyramiden ein zum Grundelement senkrechtes Magnetfeld ergibt. Zwischen den Pyramiden sind weitere Magnete nach der Art einer Halbach - Anordnung mit einer Magnetisierung parallel zum Grundelement angeordnet. So eine Magnetanordnung ist recht aufwändig in der Herstellung, da sehr viele Magnete mit sehr engen Maßtoleranzen benötigt werden, und deren Platzierung wegen der starken Magnetkräfte schwierig ist.

Die US 6879063 B2 beschreibt einen Planarmotor mit einem einfacheren Aufbau mit Halbach - Anordnung der Magnete. Die Magnete sind hier quaderförmig, was deren Anzahl im Vergleich zum oben zitierten Stand der Technik reduziert. Dennoch müssen auch diese Magnete mit engen Toleranzen gefertigt werden, und bei der Monatage müssen hohe Magnetkräfte beherrscht werden.

Die US 2003 0155821 A1 offenbart einen Planarmotor gemäß dem Oberbegriff des Anspruchs 1.

Aufgabe der Erfindung ist es einen Planarmotor anzugeben, der einfacher herzustellen ist, insbesondere was die Anforderungen an die Maßtoleranzen der Magnete und die Montage der Magnete auf der Grundplatte betrifft.

Diese Aufgabe wird gelöst durch einen Planarmotor mit den Merkmalen des Anspruchs 1.

Es wird ein Planarmotor mit einem flächigen, in einer Ebene liegenden Grundelement und darauf angeordneten, quaderförmigen ersten Magneten beschrieben, deren Magnetisierung senkrecht auf der Ebene steht, und die in einer ersten Richtung und in einer zweiten Richtung regelmäßig und mit abwechselnder Polarität angeordnet sind. Der Planarmotor weist außerdem quaderförmige zweite Magnete auf, deren Magnetisierung parallel zur Ebene liegt, und die mit abwechselnder Polarität jeweils in der ersten Richtung und zweiten Richtung zwischen den ersten Magneten angeordnet sind, so dass jeder erste Magnet jeweils von vier zweiten Magneten umgeben ist. Der Planarmotor unterscheidet sich vom Stand der Technik dadurch, dass die ersten Magnete auf Vorsprüngen des Grundelements angeordnet sind.

Die Vorsprünge erleichtern das Platzieren der Magnete und bilden Nuten zur Aufnahme der zweiten Magnete. Hat man während der Montage des Planarmotors zweite Magnete platziert, werden diese durch den zusätzlichen Halt, den die Nuten den zweiten Magneten bieten, gehalten und können z.B. während des Aushärtens eines Klebers nicht mehr leicht verrutschen. Außerdem werden die Magnete nun nicht mehr aneinander ausgerichtet, sondern an den Vorsprüngen und Nuten, so dass Magnete mit größeren Fertigungstoleranzen bezüglich ihrer Abmessung verwendet werden können.

Weitere Vorteile sowie Einzelheiten der vorliegenden Erfindung ergeben sich aus der nachfolgenden Beschreibung einer bevorzugten Ausführungsform anhand der Figuren. Dabei zeigt
- Figur 1: eine 3D - Ansicht von Teilen des Planarmotors,
- Figur 2: einen Schnitt durch Teile des Planarmotors.

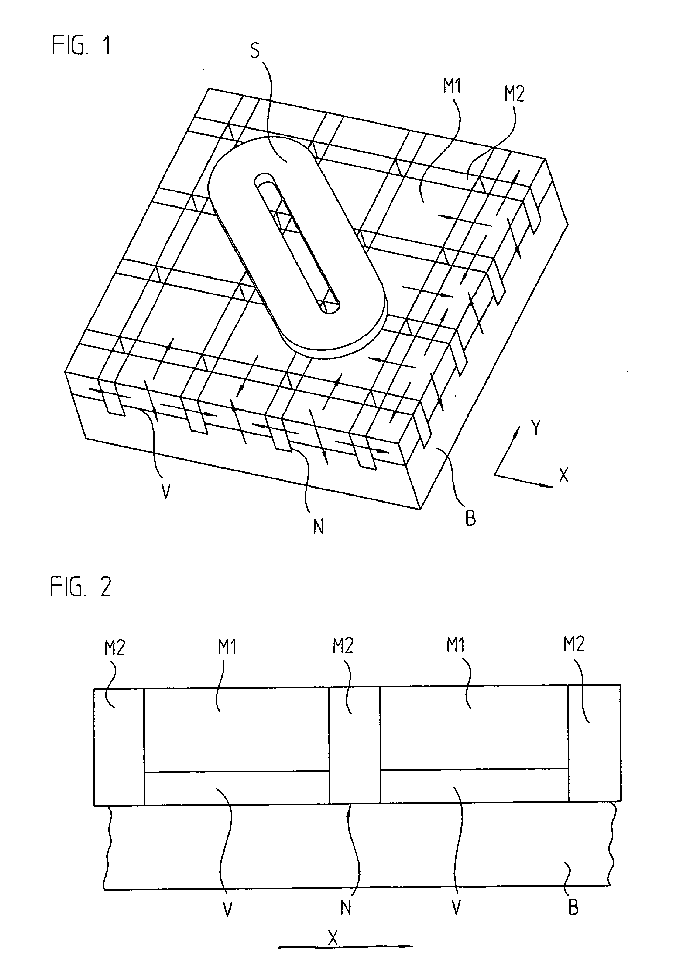

Figur 1 zeigt als Ausführungsbeispiel einen Planarmotor in einer 3D-Ansicht, Figur 2 zeigt einen Ansicht mit Blickrichtung in Y-Richtung. In der folgenden Beschreibung wird auf beide Figuren Bezug genommen.

Der Planarmotor weist einen Stator auf, bei dem auf einem Grundelement B in der Ebene XY im Wesentlichen quaderförmige erste Magnete M1 angeordnet sind, deren Magnetisierung senkrecht auf der Ebene XY steht, und die in einer ersten Richtung X und in einer zweiten Richtung Y regelmäßig und mit abwechselnder Polarität angeordnet sind. Der Planarmotor weist außerdem im Wesentlichen quaderförmige zweite Magnete M2 auf, deren Magnetisierung parallel zur Ebene XY in X-Richtung oder Y-Richtung liegt, und die mit abwechselnder Polarität jeweils in der ersten Richtung X und zweiten Richtung Y zwischen den ersten Magneten M1 angeordnet sind. Im Bereich der sichtbaren Schnittkanten der Figur 1 sind die Magnetisierungsrichtungen der Magnete M1, M2 mit Pfeilen angedeutet.

Oberhalb der Magnete M1, M2 befindet sich ein bewegliches Teil mit der zu positionierenden Last. Dieses bewegliche Teil enthält längliche Spulen S (von denen in der Figur 1 nur eine dargestellt ist), die schräg zur X- und Y-Richtung ausgerichtet sind. Durch geeignetes Bestromen dieser Spulen S lässt sich das bewegliche Teil des Planarmotors in X- und Y-Richtung sehr genau positionieren.

Die quaderförmigen ersten und zweiten Magnete M1, M2 können abgerundete oder abgeschrägte Kanten aufweisen.

Jeder erste Magnet M1 ist jeweils von vier zweiten Magneten M2 umgeben. Die vier einen bestimmten ersten Magnet M1 umgebenden zweiten Magnete M2 haben bezüglich dieses ersten Magnets M1 alle die gleiche Magnetisierungsrichtung, nämlich entweder zum ersten Magnet M1 hin, oder von diesem Magnet M1 weg. Eine solche Magnetanordnung ist auch als zweidimensionale Halbach - Anordnung bekannt.

Die ersten Magnete M1 sind auf Vorsprüngen V am Grundelement B angebracht.

Senkrecht zur Ebene XY ist die Differenz einer Höhe der zweiten Magnete M2 und der Höhe der Vorsprünge V gerade entsprechend der Höhe der ersten Magnete. Da die Vorsprünge V und die zweiten Magnete M2 auf dem ebenen Grundelement B aufsetzen, liegen die dem Grundelement B abgewandten Flächen der ersten und zweiten Magnete M1, M2 in einer gemeinsamen Ebene oberhalb des Grundelements B.

Die Vorsprünge V und die ersten Magnete M1 sind bezüglich einer senkrechten Projektion in die Ebene XY deckungsgleich. In der bevorzugten Ausführungsform sind die Vorsprünge V und Magnete M1 in dieser Projektion quadratisch.

Die Vorsprünge V bilden Nuten N, in denen die zweiten Magnete M2 angeordnet sind. Die Breite der Nuten N entspricht dabei der Breite der zweiten Magnete M2 in dieser Richtung. Die zweiten Magnete M2 werden daher seitlich von den Vorsprüngen V abgestützt. Die Nuten N können auch trapez- oder schwalbenschwanzförmig ausgebildet sein. Bei der Montage der Magnete M1, M2 können so zunächst die zweiten Magnete M2 in die Nuten N eingeklebt werden. Die Position der zweiten Magnete ist dabei durch die Vorsprünge V und Nuten N definiert. Während dem Einbringen der ersten Magnete M1 können die zweiten Magnete M2 nicht mehr leicht verrutschen, was den Montagevorgang insgesamt erheblich vereinfacht. Die ersten Magnete M1 werden wie die zweiten Magnete M2 mit dem Grundelement B verklebt.

Da die ersten und zweiten Magnete M1, M2 nun nicht mehr aneinander, sondern an den Vorsprüngen V und Nuten N ausgerichtet werden, können die Maßtoleranzen der Magnete M1, M2 größer ausfallen.

Zudem können dank der Vorsprünge V dünnere erste Magnete M1 als im Stand der Technik verwendet werden, was den Planarmotor in der Herstellung günstiger macht. Bei einer Höhe des Vorsprungs V von beispielsweise 5 mm und einer Höhe des Magnets von 30 mm ergibt sich so eine Reduzierung der Magnethöhe von 35 mm auf 30 mm, also eine Volumenreduzierung der ersten Magnete um etwa 14 %. Die Leistung des Planarmotors wird dadurch noch nicht spürbar reduziert, insbesondere bei der Verwendung eines magnetisch leitfähigen Materials für das Grundelement B und dessen Vorsprünge V.

Die Vorsprünge V können durch Material abtragende Bearbeitung des Grundelements B hergestellt werden. Es können aber auch separate Vorsprünge V am Grundelement B befestigt werden. Alle gängigen Befestigungstechniken kommen hierfür in Frage. Grundelement B und Vorsprünge V können einstückig hergestellt werden durch Prägen, Gießen oder Sintern. Die Vorsprünge V können auch durch galvanische Abscheidung erzeugt werden.

Das Grundelement B besteht vorzugsweise aus einer Stahlplatte, z.B. 40 mm dick, in die Nuten N der Tiefe 5 mm gefräst sind. Die dadurch entstehenden Vorsprünge V haben dann die erwähnte Höhe von 5 mm.

Um Kosten und / oder Gewicht zu sparen, können die Grundplatte B und / oder die Vorsprünge V auch aus anderen Materialien gefertigt werden. Hier bieten sich z.B. Aluminium oder andere Leichtmetalle, oder auch Verbundwerkstoffe mit Epoxid oder Polyoxymethylen (POM) an.

## Patentansprüche

1. Planarmotor mit einem flächigen, in einer Ebene (XY) liegenden Grundelement (B) und darauf angeordneten quaderförmigen ersten Magneten (M1), deren Magnetisierung senkrecht auf der Ebene (XY) steht, und die in einer ersten Richtung (X) und in einer zweiten Richtung (Y) regelmäßig und mit abwechselnder Polarität angeordnet sind, sowie quaderförmigen zweiten Magneten (M2), deren Magnetisierung parallel zur Ebene (XY) liegt, und die mit abwechselnder Polarität jeweils in der ersten Richtung (X) und zweiten Richtung (Y) zwischen den ersten Magneten (M1) angeordnet sind, so dass jeder erste Magnet (M1) jeweils von vier zweiten Magneten (M2) umgeben ist, **dadurch gekennzeichnet dass** die ersten Magnete (M1) auf Vorsprüngen (V) des Grundelements (B) angeordnet sind, und dass senkrecht zur Ebene (XY) die Summe aus einer Höhe der ersten Magnete (M1) und einer Höhe der Vorsprünge (V) einer Höhe der zweiten Magnete (M2) entspricht, so dass dem Grundelement (B) abgewandte Flächen der ersten und zweiten Magnete (M1, M2) in einer gemeinsamen Ebene parallel zum Grundelement (B) liegen.

2. Planarmotor nach Anspruch 1, **dadurch gekennzeichnet, dass** senkrechte Projektionen der Vorsprünge (V) und der ersten Magnete (M1) in die Ebene (XY) deckungsgleich sind.

3. Planarmotor nach Anspruch 1, 2, **dadurch gekennzeichnet, dass** die zweiten Magnete (M2) in Nuten N angeordnet sind, die von je zwei benachbarten Vorsprüngen (V) gebildet sind.

4. Planarmotor nach Anspruch 3, **dadurch gekennzeichnet, dass** eine Breite der Nut (N) einer Breite der zweiten Magnete (M2) entspricht, so dass die zweiten Magnete (M2) von den Vorsprüngen (V) seitlich abgestützt sind.

## Claims

1. Planar motor having a two-dimensional base member (B) which lies in a plane (XY) and on which there are arranged cuboid first magnets (M1) whose magnetization is perpendicular to the plane (XY) and which are arranged regularly and with alternating polarity in a first direction (X) and in a second direction (Y), and cuboid second magnets (M2) whose magnetization is parallel to the plane (XY), and which are arranged with alternating polarity respectively in the first direction (X) and second direction (Y) between the first magnets (M1) so that each first magnet (M1) is respectively surrounded by four second magnets (M2), **characterized in that** the first magnets (M1) are arranged on protrusions (V) of the base member (B), and **in that** perpendicular to the plane (XY) the sum of a height of the first magnets (M1) and a height of the protrusions (V) corresponds to a height of the second magnets (M2) so that surfaces of the first and second magnets. (Ml, M2) averted from the base member (B) lie in a common plane parallel to the base member (B).

2. Planar motor according to Claim 1, **characterized in that** perpendicular projections of the protrusions (V) and the first magnets (M1) are congruent in the plane (XY).

3. Planar motor according to Claims 1, 2, **characterized in that** the second magnets (M2) are arranged in grooves (N) which are formed by two adjacent protrusions (V) in each case.

4. Planar motor according to Claim 3, **characterized in that** a width of the groove (N) corresponds to a width of the second magnets (M2) so that the second magnets (M2) are laterally supported by the protrusions (V).

## Revendications

1. Moteur planaire comprenant un élément de base (B) plat, situé dans un plan (XY) et des premiers aimants (M1) parallélépipédiques disposés sur celui-ci, dont l'aimantation est perpendiculaire au plan (XY), et qui sont disposés de manière régulière et avec une alternance de polarité dans une première direction (X) et dans une deuxième direction (Y), ainsi que des deuxièmes aimants parallélépipédiques (M2), dont l'aimantation est parallèle au plan (XY), et qui sont disposés avec une alternance de polarité à chaque fois dans la première direction (X) et la deuxième direction (Y) entre les premiers aimants (M1), de telle sorte que chaque premier aimant (M1) soit à chaque fois entouré par quatre deuxièmes aimants (M2), **caractérisé en ce que** les premiers aimants (M1) sont disposés sur des saillies (V) de l'élément de base (B), et **en ce que** perpendiculairement au plan (XY), la somme d'une hauteur des premiers aimants (M1) et d'une hauteur des saillies (V) correspond à une hauteur des deuxièmes aimants (M2), de sorte que des surfaces opposées à l'élément de base (B) des premiers et deuxièmes aimants (Ml, M2) soient situées dans un plan commun parallèle à l'élément de base (B).

2. Moteur planaire selon la revendication 1, **caractérisé en ce que** des projections verticales des saillies (V) et des premiers aimants (M1) dans le plan (XY) sont en coïncidence.

3. Moteur planaire selon les revendications 1 et 2, **caractérisé en ce que** les deuxièmes aimants (M2) sont disposés dans des rainures N qui sont formées par deux saillies adjacentes respectives (V).

4. Moteur planaire selon la revendication 3, **caractérisé en ce qu'**une largeur de la rainure (N) correspond à une largeur des deuxièmes aimants (M2), de telle sorte que les deuxièmes aimants (M2) soient supportés latéralement par les saillies (V).
